# EUROPÄISCHE PATENTSCHRIFT

(11) **EP 2 454 123 B1**
(45) Veröffentlichungstag und Bekanntmachung des Hinweises auf die Patenterteilung: **24.04.2013**
(21) Anmeldenummer: 10747809.1
(22) Anmeldetag: 23.06.2010
(51) Int. Cl.: B60R 5/04

(54) **HALTEEINRICHTUNG FÜR EINEN HÖHENVERSTELLBAREN LADEBODEN EINES FAHRZEUGES**
HOLDING UNIT FOR A HEIGHT ADJUSTABLE CARGO BED OF A VEHICLE
DISPOSITIF DE RETENUE POUR PLANCHER DE CHARGEMENT RÉGLABLE EN HAUTEUR D'UN VÉHICULE

(30) Priorität: 13.07.2009 DE 102009032892
(43) Veröffentlichungstag der Anmeldung: 23.05.2012
(73) Patentinhaber: Volkswagen Aktiengesellschaft, 38440 Wolfsburg (DE)
(72) Erfinder: SEVERIN, Oliver, 12555 Berlin (DE); OMMEN, Gerd, 38518 Gifhorn (DE); WEHLAUER, Udo, 38446 Wolfsburg (DE)
(86) Internationale Anmeldenummer: PCT/EP2010/003769
(87) Internationale Veröffentlichungsnummer: WO 2011/006577

(56) Entgegenhaltungen:
- EP-A1- 1 378 397
- EP-A1- 2 048 031
- EP-A2- 0 893 307
- DE-A1- 10 261 393
- DE-A1-102007 027 980
- DE-A1-102007 042 365
- US-A1- 2006 016 840

## Beschreibung

Die Erfindung betrifft eine Halteeinrichtung für einen höhenverstellbaren Ladeboden eines Fahrzeuges nach dem Oberbegriff des Anspruches 1.

Derartige höhenverstellbare Ladeböden sind allgemein bekannt, mit dem Vorteil, dass der Lade- bzw. Gepäckraum an unterschiedliche Erfordernisse anpassbar ist und bei Bedarf in ein zum Beispiel unteres und ein darüber liegendes Abteil unterteilt, aber auch in seiner vollen Ladekapazität als Ganzes genutzt werden kann.

Beispielsweise ist eine Höhenverstellvorrichtung für den Ladeboden eines Kraftfahrzeuges aus der DE 10 2007 042 371 A1 bekannt, die eine Führung aufweist, an der ein Ladeboden um eine erste Schwenkachse verschwenkbar geführt ist, wobei der Ladeboden von einer unteren Ladebodenposition in eine obere Ladebodenposition überführt werden kann. Der Ladeboden weist einen hinteren Ladebodenabschnitt und einen vorderen Ladebodenabschnitt auf, die um eine zweite Schwenkachse verschwenkbar miteinander verbunden sind. Der Ladeboden kann im Bereich der zweiten Schwenkachse derart angehoben werden, dass der hintere und vordere Ladebodenabschnitt gegeneinander verschwenkt werden, wobei die Führung derart ausgebildet ist, dass der Ladeboden durch Anheben im Bereich der zweiten Schwenkachse entlang der Führung von der unteren in die obere Ladebodenposition bewegt wird. Konkret ist die Führung hier kulissenartig aufgebaut und greift ein ladebodenseitiger Bolzen in die Führung ein.

Weiter ist ein höhenverstellbares Laderaumbodensystem auch aus der DE 102 61 393 A1 bekannt, bei dem ein Ladeboden in verschiedenen übereinanderliegenden Ebenen durch eine mit der Karosserie verbundene Halteeinrichtung in der jeweiligen Ebene einbaubar ist. Diese Halteeinrichtung umfasst Führungsschienen in jeder Höhenebene, in denen der Ladeboden mit Führungselementen geführt ist. Ferner sind die Elemente zum Fixieren des in Fahrzeuglängsrichtung vorderen Randabschnittes des Ladebodens vorgesehen.

Ferner sind in Verbindung mit Laderäumen von Kraftfahrzeugen sogenannte Wendematten bekannt, so zum Beispiel aus der DE 10 2006 037 678 A1. Diese dort beschriebene Wendematte ist an keiner Stelle mit dem Kofferraumboden verbunden, so dass ein beliebiges Wenden und Entnehmen der Wendematte möglich ist. Eine erste Seite der Wendematte ist hier als Schmutzwanne ausgebildet und mit einer Tiefziehfolie überzogen, die aus einem schmutzunempfindlichen Material hergestellt ist. Die gegenüberliegende, zweite und "reguläre" Seite der Wendematte ist dagegen mit demselben Bezugsstoff bezogen wie der Kofferraumboden, so dass sich diese Wendematte dann optisch nahtlos in den Kofferraum einfügt.

Weiter ist auch aus der DE 10 2006 015 185 A1 eine Wendematte bekannt, die zwischen zwei laderaumseitigen Halteschienen eines Transport-Sicherungssystems eingesetzt wird, so dass trotz der Halteschienen eine ebene und niveaugleiche Laderaumfläche ausgebildet wird.

Aus der EP 2 048 031 A1 ist eine gattungsgemäße Halteeinrichtung für einen höhenverstellbaren Ladeboden eines Fahrzeugs mit einem Laderaum bekannt. Die Halteeinrichtung weist an jeder Fahrzeugseite zwei voneinander beabstandete Führungsstifte auf, die beide in einer korrespondierenden, fahrzeugseitigen Kulissenführung eingreifen. Jedem dieser Führungsstifte sind eigene Kulissenbahnen zugeordnet. Bei einer Höhenverstellbewegung des Ladebodens dienen die Führungsstifte als Schwenkachsen, um die herum der Ladeboden schwenkbar ist.

Demgegenüber ist es Aufgabe der vorliegenden Erfindung, eine Halteeinrichtung für einen höhenverstellbaren Ladeboden eines Fahrzeugs zur Verfügung zu stellen, die neben einer einfachen und funktionssicheren Höhenverstellbarkeit des Ladebodens eine erhöhte Funktionalität des Laderaums und des Ladebodens ermöglichen. Eine weitere Aufgabe besteht darin, einengeeigneten Ladeboden bzw. eine geeignete Anordnung eines höhenverstellbaren Ladebodens in einem Laderaum eines Fahrzeugs vorzuschlagen.

Diese Aufgaben werden gelöst mit den Merkmalen des unabhängigen Patentanspruchs 1. Vorteilhafte und zweckmäßige Weiterbildungen sind Gegenstand der Unteransprüche.

Gemäß Anspruch 1 ist eine Haltevorrichtung mit einem höhenverstellbaren Ladeboden für einen Laderaum eines Fahrzeugs, insbesondere für einen Laderaum eines Kraftfahrzeugs, vorgesehen, bei der der Ladeboden im Laderaum in definierten, unterschiedlichen Höhenpositionen anordenbar ist. Der höhenverstellbare Ladeboden kann zugleich als Wendeboden ausgebildet sein dergestalt, dass dieser sowohl im nicht-gewendeten als auch im gewendeten Zustand (mit seiner dann nach oben, in den Laderaum weisenden Ladebodenunterseite) in den unterschiedlichen Höhenpositionen anordenbar ist. Dadurch ergibt sich eine wesentlich verbesserte Funktionalität des Ladebodens und damit ein erhöhter Nutzwert, da der zum Beispiel unterschiedliche Beschichtungen auf der Ladebodenoberseite und der Ladebodenunterseite aufweisende Ladeboden in sämtlichen vorhandenen unterschiedlichen Höhenpositionen sowohl mit der Ladebodenoberseite als auch mit der Ladebodenunterseite nach oben, in den Laderaum weisend festgelegt werden kann.

Bevorzugt ist der Ladeboden dabei sowohl im gewendeten als auch im nicht-gewendeten Zustand mittels wenigstens einer Halteeinrichtung in den unterschiedlichen Höhenpositionen festgelegt. Besonders bevorzugt ist hierbei der Ladeboden und/oder die wenigstens eine Halteeinrichtung so ausgelegt, dass der Ladeboden zur Festlegung desselben mit entweder der Ladebodenunterseite oder der Ladebodenoberseite nach oben, um 180°C um eine in Laderaumlängsachsenrichtung verlaufende Wendeachse zu wenden ist. Ein derartiges Wenden um eine Laderaumlängsachse, die bevorzugt mit der Fahrzeuglängsachse zusammenfällt, ist besonders einfach durch einen Bediener durchzuführen, ohne dass hierzu ein großer Handhabungsraum benötigt wird.

Das heißt, dass der Ladeboden hier zum Beispiel derart symmetrisch ausgeführt sein kann, dass dieser sowohl "regulär" als auch mit seiner Unterseite nach oben auf einfachste Weise in den Laderaum einsetzbar ist.

Der erfindungsgemäße Ladeboden kann somit in einfachster Weise für unterschiedlichste Anforderungen und gegebenenfalls Gewohnheiten des Nutzers ausgelegt bzw. an diese angepasst werden. Zum Beispiel kann eine Seite des Ladebodens eben und die andere Seite gegebenenfalls mit Unterteilungen, etc. ausgeführt sein. Ferner kann der Ladeboden beispielsweise dann gewendet werden, wenn dessen eine Oberfläche verschmutzt oder gegebenenfalls sogar leicht beschädigt ist.

Insbesondere kann der Ladeboden an seiner Oberseite und an seiner Unterseite mit unterschiedlich ausgeführten Oberflächen versehen sein. Besonders bevorzugt kann dabei der Ladeboden an seiner Oberseite einen Teppich oder eine teppichähnliche Struktur und an seiner Unterseite eine wasser- und/oder schmutzabweisende Struktur aufweisen. Damit gelingt es zum Beispiel, den Laderaum veränderlich auf raue, gegebenenfalls gewerblich bedingte Nutzungen und auf private Nutzungen einzustellen.

Konkret weist eine erfindungsgemäße Halteeinrichtung wenigstens ein laderaumseitiges oder im Laderaum anordenbares Halteelement auf, dem wenigstens ein ladebodenseitiges Gegenelement zugeordnet ist, wobei das laderaumseitige Halteelement und/oder das ladebodenseitige Gegenelement so ausgebildet ist bzw. sind, dass die Halteeinrichtung den Ladeboden sowohl in der nicht-gewendeten als auch in der gewendeten Stellung festlegt. An dieser Stelle sei ausdrücklich erwähnt, dass die gewendete Stellung zum Beispiel derjenigen Stellung entspricht, bei der die vorgesehene Ladebodenunterseite nach oben, in den Laderaum weist, während die nicht-gewendete Stellung derjenigen Stellung entspricht, in der dann die definierte Ladebodenoberseite nach innen, in den Laderaum weist. Eine derartige laderaumseitige bzw. ladebodenseitige Anordnung von miteinander zusammenwirkenden Halteelementen bzw. Gegenelementen ist auf bauteiltechnisch und fertigungstechnisch einfache Weise umsetzbar und bewirkt zudem eine hohe und dauerhafte Funktions- sowie Betriebssicherheit. Zudem lassen sich derartige Konstruktionen von Halteeinrichtungen auf einfachste Weise auch auf andere Fahrzeugmodelle übertragen.

Grundsätzlich ist es dabei möglich, lediglich ein laderaumseitiges Halteelement vorzusehen, das zum Beispiel an einer in Laderaumlängsrichtung und damit bevorzugt in Fahrzeuglängsrichtung inneren, zum Beispiel einer Fondsitzbank zugewandten inneren Ladekante angeordnet ist. Ein besonders stabiler und auch in den unterschiedlichen Höhenpositionen wenig wackliger und damit klapperfreier Aufbau ergibt sich jedoch mit einer besonders bevorzugten konkreten Ausgestaltung, bei der jeweils ein laderaumseitiges Halteelement an gegenüberliegenden Seitenwänden des Laderaums angeordnet ist, denen jeweils ein ladebodenseitiges Gegenelement an gegenüberliegenden Ladebodenseiten zugeordnet ist. Um insbesondere in Verbindung mit dem gleichzeitig als Wendeboden ausgebildeten Ladeboden eine funktionssichere und einfache Festlegung des Ladebodens in den unterschiedlichen Höhenpositionen einerseits sowie im gewendeten und nicht-gewendeten Zustand andererseits zur Verfügung zu steilen, ist weiter bevorzugt vorgesehen, die einander gegenüberliegenden laderaumseitigen Halteelemente als Gleichteile und/oder die einander gegenüberliegenden ladebodenseitigen Gegenelemente als Gleichteile auszubilden.

Eine besonders einfache und problemlose Höhenverstellung sowie Fixierung im gewendeten als auch im nicht-gewendeten Zustand des Ladebodens wird dadurch erzielt, dass das wenigstens eine laderaumseitige Halteelement durch eine, bevorzugt in einer Konsole ausgebildete, Kulissenführung gebildet ist, in die der Ladeboden mit einem jeweils zugeordneten vorsprungartigen Eingriffs- und/oder Führungselement im Wesentlichen führungsbolzenartig eingreift und in unterschiedlichen Höhenpositionen abstützbar ist. Die Ausbildung der Kulissenführung in Verbindung mit Konsolen kann fertigungstechnisch günstig umgesetzt werden, zum Beispiel in Verbindung mit Kunststoff-Konsolen. Derartige, die Kulissenführungen aufweisenden Konsolen können zum Beispiel als separate Bauteile ausgebildet sein und entsprechend an den Seitenwänden des Laderaums, durch zum Beispiel eine Verschraubung oder dergleichen festgelegt werden. Die Seitenwände selbst können zum Beispiel aus Kunststoff hergestellte Seitenverkleidungen oder aber auch gegebenenfalls unmittelbar die Karosseriewände des Kraftfahrzeugs selbst sein.

Bevorzugt ist jede der Kulissenführungen als nach oben offene Kulissenführung mit mehreren, auf unterschiedlichen Höhenniveaus liegenden Abstützschultern ausgebildet. Mittels derartiger Abstütrschultern lässt sich eine vorteilhafte, einfache und funktionssichere Abstützung und damit Festlegung des Ladebodens auf den unterschiedlichen Höhenniveaus erzielen. Besonders bevorzugt ist hierbei zudem vorgesehen, dass die einzelnen Abstützschultern jeder Kulissenführung mittels eines Verbindungsschlitzes verbunden sind. Dieser Verbindungsschlitz dient insbesondere dazu, die jeweiligen Führungselemente unter im Wesentlichen dauerhaften Eingriff in der Kulissenführung zwischen den jeweiligen Abstützschultern zu verlagern.

Besonders bevorzugt ist hierbei vorgesehen, dass im Mündungsbereich der Kulissenführung und/oder im Verbindungsschlitzbereich zwischen zwei in Hochachsenrichtung übereinanderliegenden Abstützschultern ein schräg verlaufender oder winklig gegen die Hochachsenrichtung angestellter Wandabschnitt ausgebildet ist, der die Führungselemente in der Art einer Führungsrampe zu der jeweiligen Abstützschulter hin gleitend abstützt. Damit wird das Überführen des Ladebodens von dem einen Höhenniveau zu einem darunter- oder darüberliegendem Höhenniveau auf einfache Weise möglich, ohne dass dies zu unerwünschten Verhakungen oder zu Verklemmungen führt. Dies wird dadurch möglich, dass die jeweiligen Führungselemente durch bevorzugt in etwa parallel zu, in Laderaumlängsrichtung verlaufenden Längsseiten des Ladebodens ausgerichtete, längliche Leisten ausgebildet sind, die in den Kulissenführungen auf und/oder in den jeweils zugeordneten Abstützschultern wenigstens in Laderaumlängsrichtung formschlüssig gehalten sind. Unter einer länglichen Leistenausbildung werden dabei solche Ausgestaltungen verstanden, bei denen eine Längsseite länger bzw. größer ist als eine diesbezüglich querverlaufende Seitenerstreckung. Mit einer derartigen konkreten Ausgestaltung wird auf besonders einfache Weise ein klapperfreies Festlegen des Ladebodens im sowohl gewendeten als auch im nicht-gewendeten Zustand in den unterschiedlichen Höhenniveaus gewährleistet. Unter einer formschlüssigen Halterung wird dabei ferner auch eine solche Verspannung zwischen zwei in Laderaumlängsrichtung gegenüberliegenden Kulissenwandbereichen verstanden, die die Leisten und damit den Ladeboden mit einer vorgegebenen Haltekraft in Position hält.

Um eine einfache Handhabbarkeit der Höhenverstellung zu gewährleisten, ist vorgesehen, dass die Leisten nur bei aufgeklapptem Ladeboden über den Verbindungsschlitz in eine andere Höhenposition überführbar sind. Das heißt, dass hier dann ein einfaches Verschwenken des Ladebodens um die Leisten ausreicht, um den Ladeboden dann in eine andere gewünschte Höhenposition verstellen zu können.

Gemäß einer weiteren besonders bevorzugten konkreten Ausgestaltung ist vorgesehen, dass die Kulissenführung im nach oben offenen Kulissenführungsbereich und/oder im Verbindungsschlitzbereich zwischen zwei in Hochachsenrichtung übereinanderliegenden Abstützschultern mit einem solchen, einen definierten Krümmungs- oder Schwenkradius aufweisenden Wandabschnitt ausgebildet ist, dass die Leiste beim Ab- und Aufklappen des Ladebodens in die jeweilige bzw. aus der jeweiligen Höhenposition mit einer definierten Schwenkbewegung geführt zu der jeweiligen Abstützschulter hin bzw. von dieser weg verschwenkbar ist. Insbesondere mit einer derartigen Maßnahme lässt sich auch eine einfach handzuhabende Verstellbarkeit des Ladebodens realisieren, ohne dass es zu unerwünschten Verklemmungen und Verkippungen kommen kann, die die Verlagerung des Ladebodens behindern könnte.

Für eine besonders funktionssichere Festlegung der Leisten in deren jeweiliger Höhenposition an der Abstützschulter kann vorgesehen sein, dass die Leisten im in bzw. auf die jeweilige Abstützschulter ein- bzw. aufgesetzten Zustand mit einem in Leistenlängsrichtung vorderen und/oder hinteren Leistenende in eine abstützschulterseitige Rastnut eingedrückt ist bzw. sind. Insbesondere in Verbindung mit einer vorderen und einer hinteren Rastnut ist hier dann vorzusehen, dass wenigstens eine der Rastnuten mit einer definierten Kraft lösbar überdrückt werden kann, zum Beispiel eine entsprechende Rastnase elastisch rückfedernd ausgebildet ist und sowohl beim Einschwenken als auch beim Aufklappen einfachst überdrückt werden kann. Dadurch wird ein besonders sicheres Halten und ein besonders klapperfreier Aufbau möglich.

Gemäß einer besonders bevorzugten konkreten Ausgestaltung weist die Leiste eine rautenförmige Außenkontur auf, die bevorzugt bezüglich einer in Längsachsenrichtung und/oder in Hochachsenrichtung durch die Leiste verlaufenden Symmetrieachse symmetrisch ausgebildet sind. Mit einer derartigen Leistenausgestaltung und insbesondere mit einer derartigen symmetrischen Leistenausgestaltung lässt sich auf besonders einfache und funktionssichere Weise die Verwendung von auf gegenüberliegenden Seiten identischen Kulissenführungen realisieren, da die jeweiligen Kulissenführungen dann die beiderseits im Wesentlichen identisch ausgebildeten Leisten sowohl im gewendeten als auch nicht-gewendeten Zustand des Ladebodens aufnehmen können.

Herstellungstechnisch günstig können die Führungselemente bzw. Leisten an Verbindungs- bzw. Winkelstücken, bevorzugt aus Kunststoff, angeformt sein, die den Ladeboden an seiner Querseite und/oder an seiner Längsseite abschnittsweise umfassen und die bevorzugt durch Klebeverbindungen am Ladeboden befestigt sind. Die Führungselemente bzw. Leisten können aber auch unmittelbar an dem Ladeboden angeformt sein. Das heißt, dass gemäß einer bevorzugten alternativen Ausführungsform vorgesehen ist, dass das wenigstens eine Führungselement materialeinheitlich und/oder einstückig mit dem Ladeboden ausgebildet ist, insbesondere das wenigstens eine Führungselement materialeinheitlich und/oder einstückig mit einem den Ladeboden versteifenden und/oder verstärkenden Verstärkungselement ausgebildet ist. Das wenigstens eine Führungselement kann dabei zum Beispiel aus dem Ladeboden bzw. aus dem Verstärkungselement ausgeformt werden. Dieses Verstärkungselement wird bevorzugt durch eine Verstärkungsplatte aus einem geeigneten Material, zum Beispiel einem Kunststoffmaterial gebildet, das den Ladeboden versteift bzw. verstärkt und welches auf wenigstens einer Seite mit einer entsprechenden Beschichtung versehen sein kann, was aber nicht zwingend erforderlich ist. Mit einer derartigen erfindungsgemäßen Ausführungsform lässt sich der Bauteilaufwand erheblich reduzieren, da kein separates Bauteil benötigt wird, das am Ladeboden festgelegt werden muss. Weiter können auch die Montagekosten verringert bzw. reduziert werden.

In besonders einfacher Weise kann der Ladeboden in einer Hochstellposition mit seiner der Laderaumöffnung zugewandten Querseite an einer in Höhe der dortigen Ladekante liegenden Auflageleiste einer Laderaumabschnittswand und in einer tiefsten Stellung mittel- oder unmittelbar am Laderaumboden, insbesondere am Bodenblech, des Laderaums aufliegen. So kann zum Beispiel in der höheren Stellung der Ladeboden mit der Ladekante des Laderaums bündig sein, während er in der tieferen Stellung unterhalb dieser Ladekante liegt.

Eine vereinfachte Verstellbarkeit kann auch dadurch erzielt werden, dass der Ladeboden bei der Höhenverstellung, insbesondere im Zusammenwirken mit der zuvor beschriebenen Kulissenführung zusätzlich in Längsrichtung derart verlagert wird, dass die nur aufliegende Querseite des Ladebodens in der tieferen Stellung an der höher liegenden Auflageleiste vorbeiführbar ist.

In vorteilhafter Weiterbildung der Erfindung kann der Ladeboden wenigstens in einer hochgestellten Position mit einem definierten Ladebodenabschnitt um eine quer verlaufende Klappachse klappbar sein, wobei an den Seitenwänden des Laderaumes angeordnete, bevorzugt zwischen den Führungselementen und der Klappachse liegende, Auflager den nicht aufklappbaren Bereich des Ladebodens in dessen höherer Stellung abstützen. Dies ermöglicht eine Nutzung bzw. Zugänglichkeit auch des unterhalb des Ladebodens befindlichen Laderaumes bei höher verstelltem Ladeboden.

Dazu wird ferner vorgeschlagen, dass in dem nicht aufklappbaren Bereich des Ladebodens an dessen Längsseiten offene Ausnehmungen vorgesehen sind, die bei der tiefer liegenden Stellung des Ladebodens in der Kulissenführung mit den Auflagern derart fluchten, dass der Ladeboden an den Auflagern vorbei am zum Beispiel Bodenblech ablegbar ist. Hierbei wird in vorteilhafter Weise die gleichzeitige Längenverstellung des Ladebodens in den Kulissenführungen dazu genutzt, um die Auflager bedarfsgerecht in oder außer Wirkstellung zu bringen und ferner die vordere Querseite des Ladebodens an die schräg nach oben hinten verlaufenden Rückenlehnen der Rückseite anzupassen.

Alternativ dazu können die Auflager jedoch auch derart verstellbar an den Seitenwänden des Gepäckraumes angeordnet sein, dass sie von einer Abstützstellung in eine Nicht-Gebrauchsstellung und umgekehrt überführbar sind. Die Auflager können zum Beispiel verschwenkbar oder abklappbar an den Seitenwänden angeordnet sein und bevorzugt manuell verstellt werden.

Die Halteeinrichtung für einen höhenverstellbaren Ladeboden eines Fahrzeugs mit einem Laderaum weist wenigstens ein als Kulissenführung ausgebildetes, laderaumseitig anordenbares Halteelement auf, in die der Ladeboden mit einem einzigen zugeordneten Eingriffs- und/oder Führungselement eingreift und in unterschiedlichen Höhenpositionen anordenbar ist, wobei jede Kulissenführung mit mehreren, auf unterschiedlichen Höhenniveaus liegenden Abstützschultern ausgebildet ist, und wobei die einzelnen Abstützschultern jeder Kulissenführung mittels eines Verbindungsschlitzes verbunden sind, der so ausgebildet ist, dass das jeweilige Führungselement unter Eingriff in die Kulissenführung zwischen den jeweiligen Abstützschultern verlagerbar ist. Das Führungselement ist so ausgebildet, dass dieses in der jeweiligen Abstützschulter-Abstützposition in Ladebodenlängsrichtung gesehen formschlüssig in der jeweiligen Kulissenführung abgestützt und gehaltert ist. Mit einer derartigen

Vorrichtung mit einem höhenverstellbaren Ladeboden ist ein klapperfreies Festlegen des Ladebodens in den unterschiedlichen Höhenniveaus durch eine einfache zum Beispiel Abstütz-und/oder Anlageverbindung eines entsprechend ausgebildeten Führungselementes an in Ladebodenlängsrichtung gegenüberliegenden Kulissenführungsbereichen möglich. Auch hier wird somit unter einer formschlüssigen Halterung wiederum eine solche Verspannung zwischen zwei in Laderaumlängsrichtung gegenüberliegende Kulissenwandbereichen verstanden, die die bevorzugt durch in Ladebodenlängsrichtung gesehen längliche Leisten ausgebildeten Führungselemente und damit den Ladeboden mit einer vorgegebenen Haltekraft in Position hält.

Das wenigstens eine Führungselement der Halteeinrichtung weist eine solche Geometrie und/oder Außenkontur auf, dass dieses nur bei aufgeklapptem Ladeboden über einen entsprechend dimensionierten Verbindungsschlitz der jeweiligen Kulissenführung in eine andere Höhenposition überführbar ist. Hierdurch ergibt sich eine besonders einfache Handhabbarkeit der Höhenverstellung, da hier dann ein einfaches Verschwenken des Ladebodens um die bevorzugt durch die länglichen Leisten ausgebildeten Führungselemente ausreicht, um den Ladeboden in eine andere gewünschte Höhenposition verstellen zu können.

Weitere vorteilhafte Ausgestaltungen sind Gegenstand der Unteransprüche. Die hiermit erzielbaren Vorteile ergeben sich aus den zuvor gemachten Ausführungen, auf die zur Vermeidung von Wiederholungen explizit verwiesen wird.

Konkrete Ausführungsbeispiele der Erfindung werden im Folgenden anhand der schematischen Zeichnung beispielhaft näher erläutert. Es zeigen:
- Fig. 1: eine Ansicht von schräg oben auf einen nur teilweise dargestellten Gepäckraum eines Personenkraftfahrzeuges, mit einer Seitenwand und einem höhenverstellbaren Ladeboden, wobei der Ladeboden in der höheren Stellung positioniert ist;
- Fig. 2: die Ansicht gemäß Fig. 1 mit tiefer verstelltem Ladeboden;

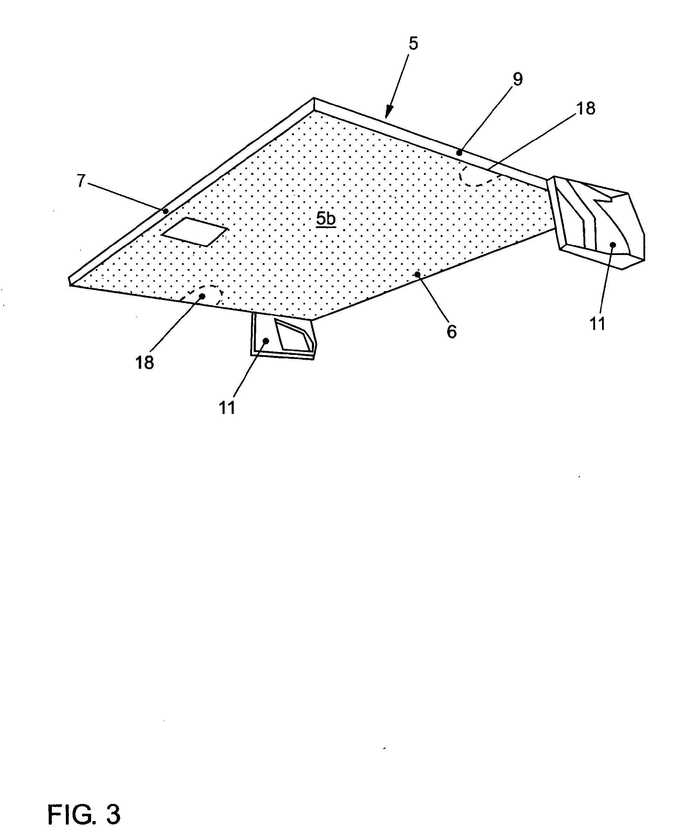

- Fig. 3: eine Ansicht von schräg unten auf den Ladeboden mit den die Kulissenführungen aufweisenden Konsolen;
- Fig. 4: eine raumbildliche Ansicht auf eine der Konsolen mit eingeformter Kulissenführung;
- Fig. 5: eine raumbildliche Ansicht eines Winkelstücks mit angeformter Leiste, die mit einer Kulissenführung zusammenwirkt;
- Fig. 6: das Winkelstück gemäß Fig. 5 in einer gedrehten Ansicht;
- Fig. 7a bis 7f: in skizzenhafter Darstellung das Zusammenwirken der Vorsprünge bzw. Leisten des Ladebodens mit den Kulissenführungen in der höheren Stellung und der tieferen Stellung des Ladebodens;
- Fig. 7g: eine vergrößerte Detailansicht der Fig. 7a mit zusätzlicher, zweiter Rastnut im Abstützschulterbereich;
- Fig. 8: eine Draufsicht auf eine alternative Ausgestaltung des Ladebodens mit einem aufklappbaren Abschnitt und mit Auflagern, dargestellt in der höheren Stellung des Ladebodens; und
- Fig. 9: eine Draufsicht gemäß Fig. 8, jedoch in der tieferen Stellung des Ladebodens und mit unwirksamen Auflagern.

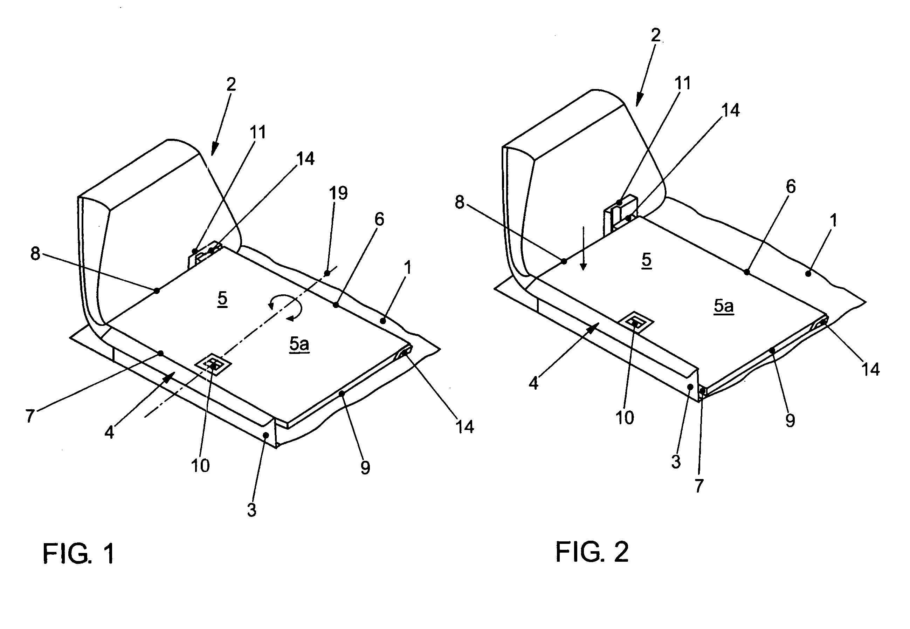

In der Fig. 1 ist der im Heckbereich eines Personenkraftfahrzeuges angeordnete Laderaum (ohne Bezugszeichen) im Wesentlichen begrenzt durch ein unteres Bodenblech 1, zwei Seitenwände 2 (es ist der besseren Übersichtlichkeit wegen nur eine Seitenwand 2 dargestellt), eine hintere Abschlusswand 3 mit einer oberen Ladekante 4, einer nicht dargestellten, an die Abschlusswand 3 anschließenden Heckklappe und vorne befindlichen Rückenlehnen von Rücksitzen (ebenfalls nicht dargestellt). Der Gepäckraum kann nach oben durch eine schwenkbare Klappe abgedeckt oder zum Fahrzeugdach offen ausgeführt sein. Im Ausführungsbeispiel sind die Seitenwände 2 zum Beispiel durch Seitenverkleidungen aus geschäumten Kunststoff gebildet, die an den darunter liegenden Karosseriebauteilen befestigt sind.

Im Laderaum ist ein symmetrisch ausgebildeter, flächiger Ladeboden 5 schwenkbar angeordnet, der in der Draufsicht etwa rechteckförmig zwei Querseiten 6, 7 und zwei Längsseiten 8, 9 aufweist. In den Ladeboden 5 ist eine Handhabe 10 zum Anheben des Ladebodens 5 integriert.

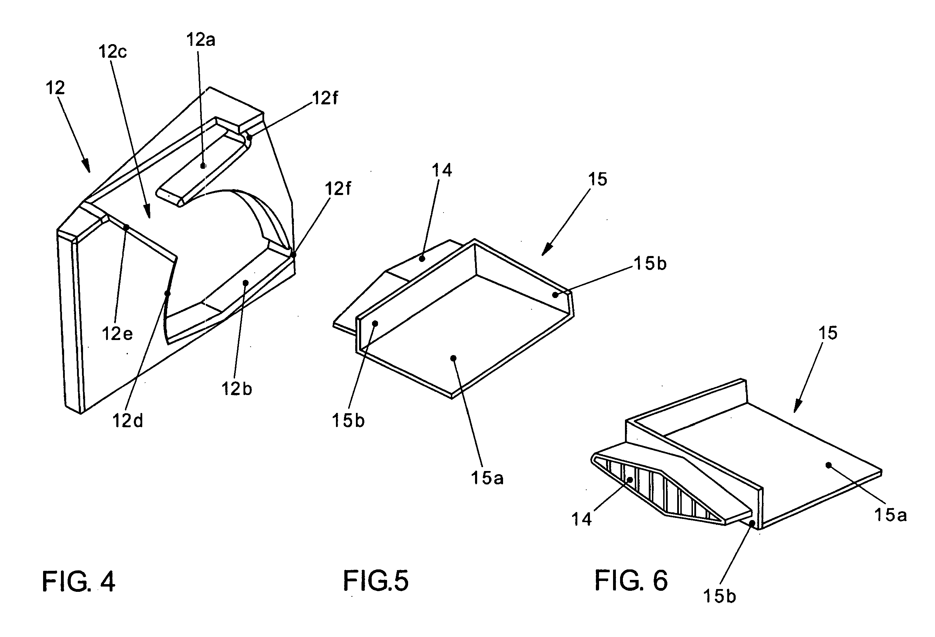

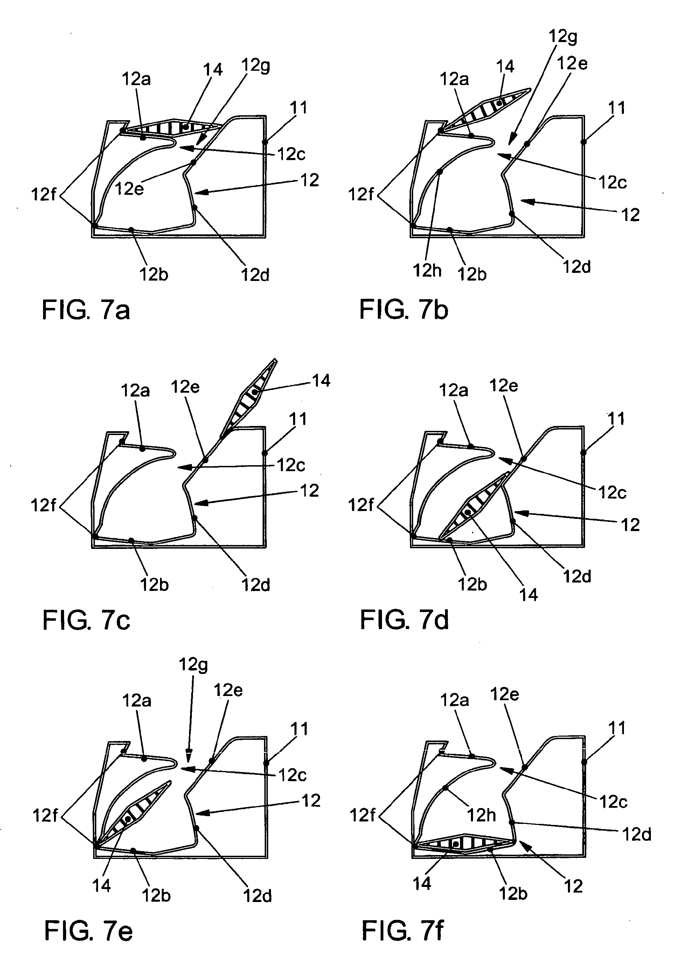

Der Ladeboden 5 ist an seiner vorderen Querseite 6 in Konsolen 11 mit jeweils einer Kulissenführung 12 (vergleiche Fig. 4 und Fig. 7a bis 7f) schwenkbar geführt und liegt an seiner vorderen Querseite 7 entweder an einer an der Abschlusswand 3 angeordneten Auflageleiste 13 (Fig. 1) oder mittelbar oder unmittelbar an dem Bodenblech 1 des Laderaumes auf.

Die Fig. 1 zeigt dabei den Ladeboden 5 in einer höher liegenden Stellung, in der dieser an der Auflageleiste 13 anliegt und dabei bündig mit der Ladekante 4 der Abschlusswand 3 ist. Die Auflageleiste 13 kann gegebenenfalls unmittelbar an der Abschlusswand 3 ausgebildet sein.

Die Fig. 2 zeigt den Ladeboden 5 in einer gegenüber der Fig. 1 tiefer liegenden Stellung, in der der Ladeboden 5 auf dem Bodenblech 1 aufliegt. Dies kann entweder unmittelbar oder gegebenenfalls auch mittelbar über einen das Bodenblech 1 aussteifenden Querträger (nicht dargestellt) erfolgen.

Die Höhenverstellbarkeit des Ladebodens 5 erfolgt über die Kulissenführungen 12 (Fig. 4 und 7a bis 7f), in die an der vorderen Querseite 6 des Ladebodens 5 angeordnete Leisten 14 als führungsbolzenartige Führungselemente einragen, die über höhenversetzt zueinander in den Kulissenführungen 12 ausgebildete Abstützschultern 12a, 12b in einer tieferen Stellung (gemäß Fig. 2) oder in einer höheren Stellung (gemäß Fig. 1) gehalten sind.

Die Abstützschultern 12a, 12b der Kulissenführungen 12 sind über einen schräg verlaufenden Verbindungsschiitz 12c miteinander verbunden. Der Verbindungsschlitz 12c ist im Bereich 12g (Schlitzverengung) so schmal ausgeführt, dass eine Überführung der Leisten 14 nur bei aufgeklapptem Ladeboden 5 bzw. bei etwa parallel zum Verbindungsschlitz 12c verlaufenden Leisten 14 möglich ist, wie dies nachfolgend noch näher erläutert wird.

Die Leisten 14 sind bevorzugt, wie dies lediglich äußerst schematisch und beispielhaft in den Fig. 1 und 2 gezeigt ist, materialeinheitlich und einstückig an dem Ladeboden 5, zum Beispiel an einer hier nicht im Detail dargestellten Versteifungs- oder Verstärkungsplatte des Ladebodens 5, angeformt bzw. aus dieser im Rahmen des Herstellungsvorgangs ausgeformt.

Die Leisten 14 können grundsätzlich aber auch, wie dies lediglich schematisch in den Fig. 5 und 6 gezeigt ist, an Verbindungs- bzw. Winkelstücken 15 angeformt sein, die eine Basiswand 15a und jeweils die Querseite 6 und eine Längsseite 8, 9 umfassende Seitenwände 15b aufweisen und als separate Bauteile zum Beispiel fest mit dem flächigen Ladeboden 5 verklebt und/oder verschweißt sein.

Die Fig. 7a bis 7f zeigen skizzenhaft die Funktion der Kulissenführungen 12 im Zusammenwirken mit den in diese seitlich einragenden Leisten 14 des Ladebodens 5.

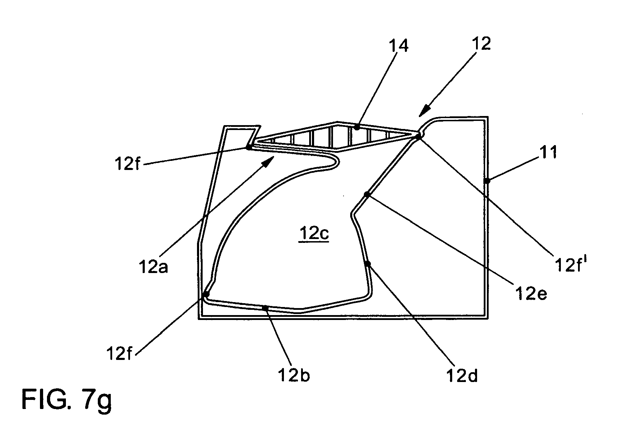

Die Fig. 7a zeigt den Ladeboden 5 in der höheren Stellung gemäß Fig. 1, wobei die Leisten 14 parallel zum Ladeboden 5 ausgerichtet sind und auf den Abstützschultern 12a der Kulissenführung 12 aufliegen. Die Leisten 14 überdecken dabei den Verbindungsschlitz 12c und sind an gegenüberliegenden Wandabschnitten der Konsole 11 in Längsrichtung formschlüssig gehalten. Konkret greift dabei das in der Bildebene der Fig. 7a linke Leistenende formschlüssig in eine Nut 12f ein und stützt sich mit dem gegenüberliegenden rechten Seitenende an einem schräg ausgebildeten rampenförmigen Wandabschnitt 12e ab. Wie dies lediglich schematisch in der eine vergrößerte Darstellung der Fig. 7a zeigenden Fig. 7g dargestellt ist, kann auch dem hinteren Leistenende eine überdrückbare Rastnut 12f' zugeordnet sein, um die Leiste 14 und damit den Ladeboden 5 mit einer definierten Haltekraft klapperfrei in Position zu halten.

Soll der Ladeboden 5 nun in die tiefere Stellung (gemäß Fig. 2) abgesenkt werden, so wird er zunächst an seiner vorderen Querseite 7 angehoben (Fig. 7b), dann nach hinten gezogen (7c), bis zur Anlage am rampenförmigen Wandabschnitt 12e, und anschließend über den Verbindungsschlitz 12c abgesenkt (Fig. 7d), bis er an der unteren Abstützschulter 12b zur Anlage kommt. Der Verbindungsschlitz 12c ist im Übergangsbereich zwischen der oberen Abstützschulter 12a und der unteren Abstützschulter 12b mit einer solchen Schlitzverengung 12g ausgebildet, dass die Leiste 14 nur im hoch- bzw. aufgeschwenkten Zustand durch die Schlitzverengung 12g hindurch gefädelt und in Richtung auf die untere Abstützschulter 12b verlagert werden kann. Um ein Verdrehen der Leiste 14 und damit des Ladebodens in ihre im Wesentlichen horizontale Position zu ermöglichen, verbreitert sich der Verbindungsschlitz 12c von der Schlitzverengung 12g ausgehend trichterförmig bzw. konisch nach oben bzw. vor allem nach unten hin. Die Schlitzverengung 12g selbst ist dabei, wie aus den Figuren 7a bis 7f ersichtlich im Wesentlichen durch die Abstützschulter 12a selbst gebildet, die mit einem vorgegebenen Spaltabstand an den winkligen, rampenförmigen Wandabschnitt 12e anschließt.

Das heißt, dass sodann der Ladeboden 5 wieder in seine etwa horizontale Lage zurückgeschwenkt wird, wobei sich die Leisten 14 wieder parallel zur unteren Abstützschulter 12b ausrichten und in den angrenzenden Wandabschnitten 12f, 12d der Konsolen 11 in Längsrichtung formschlüssig gehalten sind. Ein Anheben des Ladebodens 5 in die höhere Stellung erfolgt in umgekehrter Reihenfolge. Der Wandabschnitt 12d weist dabei einer die Einschwenkbewegung bzw. die Ausschwenkbewegung gleitend unterstützende Krümmung auf. Der Wandabschnitt 12d und der diesem gegenüberliegende Wandabschnitt 12h sind hier mit einer konvexen, vom Schlitz 12c weggerichteten Krümmung ausgebildet, um das Einschwenken und das Ausschwenken der Leiste 14 geführt zu unterstützen bzw. nicht zu blockieren.

Die Abstützschultern 12a, 12b und der schräg verlaufende Verbindungsschlitz 12c der beidseitigen Kulissenführungen 12 in den Konsolen 11 sind so angeordnet, dass mit dem Absenken des Ladebodens 5 dieser in Längsrichtung soweit nach vorne verlagert wird, dass dessen hintere Querseite 7 an der hinten liegenden Auflageleiste 13 vorbeiführbar und auf das Bodenblech 1 ablegbar ist.

Durch die symmetrische Gestaltung des Ladebodens 5 und dessen seitlich abragende Leisten 14 kann der Ladeboden 5 aus den nach oben offenen Kulissenführungen 12 vollständig herausgehoben und um die in Laderaum- bzw. Fahrzeug-Längsrichtung verlaufende Wendeachse 19 um 180 Grad gewendet werden, so dass dann dessen Oberseite nach unten zu liegen kommt.

Die Oberflächen des Ladebodens 5 sind bevorzugt unterschiedlich ausgeführt. So ist dessen Oberseite 5a (Fig. 1 und 2) zum Beispiel teppichähnlich ausgeführt oder mit einem Teppich belegt, während dessen Unterseite 5b zum Beispiel mit einer wasser- und schmutzabweisenden Beschichtung versehen ist und somit für rauere Betriebs- oder Nutzungsbedingungen geeignet ist.

Die beiden Seiten 5a, 5b des Ladebodens 5 können gegebenenfalls auch weitere unterschiedliche Gestaltungen aufweisen, zum Beispiel auch mit Unterteilungen, etc. ausgeführt sein.

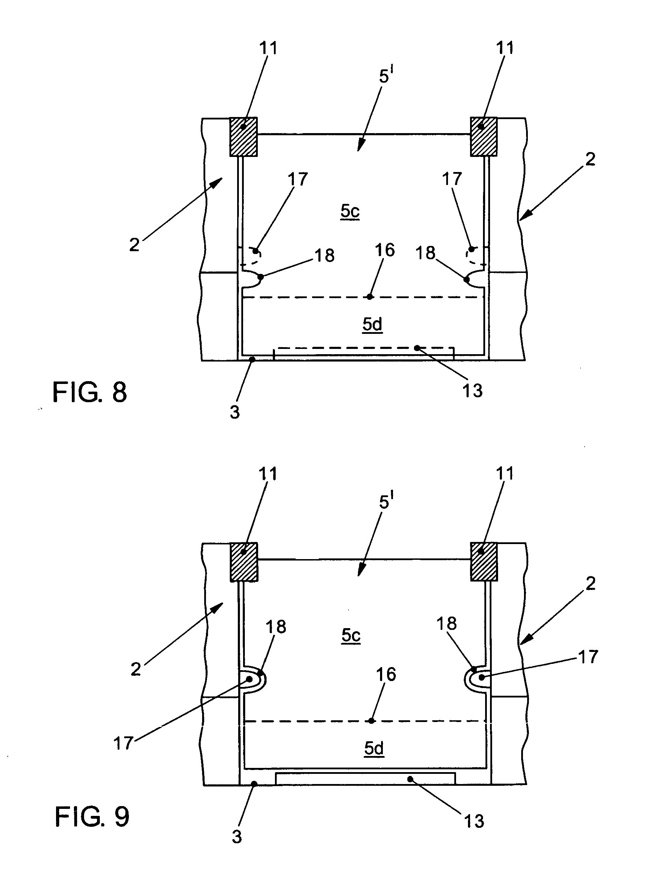

Die Fig. 8 und 9 zeigen ein weiteres Ausführungsbeispiel der Erfindung, das nur soweit beschrieben ist, als es sich von dem vorstehenden Ausführungsbeispiel unterscheidet. Gleiche Teile sind mit gleichen Bezugszeichen verssehen.

Abweichend zu der vorstehenden Ausführung ist der Ladeboden 5' zweiteilig ausgeführt, mit einem ersten, größeren Abschnitt 5c und einem zweiten kleineren Abschnitt 5d, die über eine quer verlaufende Klappachse 16 (gestrichelt eingezeichnet) miteinander verbunden sind. Die Klappachse 16 kann beispielsweise durch nicht sichtbare Kunststoffscharniere gebildet sein.

Damit der größere Abschnitt 5c des Ladebodens 5' stabil in der angehobenen, höheren Stellung aufliegt, sind an den Seitenwänden 2 unter die Längsseiten 8, 9 ragende Auflager 17 (vergleiche Fig. 8) vorgesehen. Dementsprechend liegt der Abschnitt 5c an seiner vorderen Querseite 6 an den Abstützschultern 12a der Kulissenführungen 12 und an den Auflagern 17 auf, während der kleinere, aufklappbare Abschnitt 5d über die Klappachse 16 und die Auflageleiste 13 gehalten ist.

Über den klappbaren Abschnitt 5d ist somit in einfacher Weise auch das unter dem Ladeboden 5' liegende Laderaumabteil vereinfacht zugänglich.

Ferner sind an den Längsseiten 8, 9 offene Ausnehmungen 18 angeordnet, die bei angehobenem Ladeboden 5', in der Draufsicht gesehen, benachbart zu den Auflagern 17 positioniert sind (Fig. 8).

In der tieferen, abgesenkten Stellung (Fig. 9) des Ladebodens 5' liegen durch die gleichzeitig mit der Absenkung verbundene Längsverlagerung des Ladebodens 5' die Auflager 17 in einer Flucht mit den Ausnehmungen 18, so dass der Ladeboden 5' an den Auflagern 17 vorbei am Bodenblech 1 abgelegt werden kann.

Abweichend zu der beschriebenen, starren Anordnung der Auflager 17 können diese auch schwenkbar oder klappbar ausgeführt sein, wobei dann die Ausnehmungen 18 entfallen können. Soll der Ladeboden 5' tiefer gelegt werden, so sind die Auflager 17 bevorzugt manuell parallel zu den Seitenwänden 2 zu verschwenken oder abzuklappen.

### Bezugszeichenliste

- 1: Bodenblech
- 2: Seitenwände
- 3: Abschlusswand
- 4: Ladekante
- 5: Ladeboden
- 5a: Oberseite
- 5b: Unterseite
- 5c: größerer Abschnitt
- 5d: kleinerer Abschnitt
- 6: hintere Querseite
- 7: vordere Querseite
- 8: Längsseite
- 9: Längsseite
- 10: Handhabe
- 11: Konsolen
- 12: Kulissenführungen
- 12a: Abstützschulter
- 12b: Abstützschulter
- 12c: Verbindungsschlitz
- 12d: Wandabschnitt
- 12e: rampenförmiger Wandabschnitt
- 12f: Nut
- 12f': Nut
- 13: Auflageleiste
- 14: Leisten
- 15: Winkelstücke
- 15a: Basiswand
- 15b: Seitenwände
- 16: Klappachse
- 17: Auflager
- 18: Ausnehmungen
- 19: Wendeachse

## Patentansprüche

1. Halteeinrichtung, für einen höhenverstellbaren Ladeboden eines Fahrzeugs mit einem Laderaum, mit einem höhen verstellbaren Ladeboden und wenigstens einem als Kulissenführung (12) ausgebildeten laderaumseitig anordenbaren Halteelement, in welche Kulissenführung (12) der Ladeboden (5; 5') mit einem zugeordneten einzigen Führungselement (14) eingreift und in unterschiedlichen Höhenpositionen anordenbar ist, wobei die Kulissenführung (12) mit mehreren, auf unterschiedlichen Höhenniveaus liegenden Abstützschultern (12a, 12b) ausgebildet ist, und wobei die einzelnen Abstützschultern (12a, 12b) der Kulissenführung (12) mittels eines Verbindungsschlitzes (12c) verbunden sind, der so ausgebildet ist, dass das Führungselement (14) unter Eingriff in die Kulissenführung (12) zwischen den jeweiligen Abstützschultern (12a, 12b) verlagerbar ist, **dadurch gekennzeichnet, dass** das Führungselement (14) so ausgebildet ist, dass dieses in der jeweiligen Abstützschulter-Abstützposition, in Ladebodenlängsrichtung gesehen, formschlüssig in der Kulissenführung (12) abgestützt und gehaltert ist, und dass das wenigstens eine Führungselement (14) eine solche Geometrie und/oder Außenkontur aufweist, dass dieses nur bei aufgeklapptem Ladeboden (5; 5') über einen entsprechend dimensionierten Verbindungsschlitz (12c) der jeweiligen Kulissenführung (12) in eine andere Höhenposition überführbar ist.

2. Halteeinrichtung nach Anspruch 1, **dadurch gekennzeichnet, dass** im Mündungsbereich einer nach oben offenen Kulissenführung (12) und/oder im Verbindungsschlitzbereich zwischen zwei in Hochachsenrichtung übereinanderliegenden Abstützschultern (12a, 12b) ein schräg verlaufender oder winklig gegen die Hochachsenrichtung angestellter Wandabschnitt (12e) ausgebildet ist, der das Führungselement (14) in der Art einer Führungsrampe zu der jeweiligen Abstützschulter (12b) hin gleitend abstützt.

3. Halteeinrichtung nach Anspruch 1 oder 2, **dadurch gekennzeichnet, dass** der Verbindungsschlitz (12) im Übergangsbereich von einer ersten Abstützschulter (12a) zu einer zweiten Abstützschulter (12b) mit einer Schlitzverengung (12g) ausgebildet ist, an die sich nach oben und/oder nach unten hin verbreiternde Abstützschulter- und/oder Verbindungsschlitzbereiche anschließen.

4. Halteeinrichtung nach Anspruch 2 und 3, **dadurch gekennzeichnet, dass** die Schlitzverengung (12g) durch eine einen definierten Spaltabstand zu dem schräg verlaufenden Wandabschnitt (12e) aufweisende Abstützschulter (12a) gebildet ist.

5. Halteeinrichtung nach einem der Ansprüche 1 bis 4, **dadurch gekennzeichnet, dass** das wenigstens eine Führungselementdurch eine sich in Ladebodenlängsrichtung erstreckende längliche Leiste (14) ausgebildet ist.

6. Halteeinrichtung nach Anspruch 7, **dadurch gekennzeichnet, dass** die Kulissenführung (12) in einem nach oben offenen Kulissenführungsbereich und/oder im Verbindungsschlitzbereich zwischen zwei in Hochachsenrichtung übereinanderliegenden Abstützschultern (12a, 12b) mit wenigstens einem solchen, einen definierten Krümmungs-oder Schwenkradius aufweisenden Wandabschnitt (12d, 12h) ausgebildet ist, dass die Leiste (14) beim Ab- und Aufklappen des Ladebodens (5; 5') in die jeweilige bzw. aus der jeweiligen Höhenposition mit einer definierten Schwenkbewegung geführt zu der jeweiligen Abstützschulter (12b) hin bzw. von dieser weg verschwenkbar ist.

7. Halteeinrichtung nach Anspruch 5 oder 6, **dadurch gekennzeichnet, dass** die wenigstens eine Leiste (14) im in bzw. auf die jeweilige Abstützschulter (12a, 12b) ein- bzw. aufgesetzten Zustand mit einem in Leistenlängsrichtung vorderen und/oder hinteren Leistenende in eine abstützschulterseitige Rastnut (12f) eingedrückt ist, wobei insbesondere in Verbindung mit einer vorderen und hinteren Rastnut vorgesehen ist, dass wenigstens eine Rastnut mit einer definierten Kraft lösbar überdrückbar ist.

8. Halteeinrichtung nach einem der Ansprüche 5 bis 7, **dadurch gekennzeichnet, dass** die wenigstens eine Leiste (14) eine rautenförmige Außenkontur aufweist, die bevorzugt bezüglich einer in Längsachsenrichtung und/oder in Hochachsenrichtung durch die Leiste (14) verlaufenden Symmetrieachse symmetrisch ausgebildet ist.

9. Halteeinrichtung nach einem der Ansprüche 1 bis 8, **dadurch gekennzeichnet, dass** das wenigstens eine Führungselement (14) des Ladebodens (5; 5') an ein Verbindungsstück, insbesondere ein Winkelstück (15) angeformt ist, das den Ladeboden (5; 5') an seiner Querseite (6) und/oder an seiner Längsseite (8, 9) abschnittsweise umfasst.

10. Halteeinrichtung nach einem der Ansprüche 1 bis 8, **dadurch gekennzeichnet, dass** das wenigstens eine Führungselement (14) materialeinheitlich und/oder einstückig mit dem Ladeboden (5) ausgebildet ist, insbesondere das wenigstens eine Führungselement (14) materialeinheitlich und/oder einstückig mit einem den Ladeboden (5) versteifenden und/oder verstärkenden Verstärkungselement, bevorzugt einer Verstärkungsplatte, ausgebildet ist, höchst bevorzugt an dem Verstärkungselement angeformt oder aus dem Verstärkungselement ausgeformt ist.

11. Halteeinrichtung nach einem der Ansprüche 1 bis 10, **dadurch gekennzeichnet, dass** jeweils eine Kulissenführung (12) als laderaumseitiges Halteelement an gegenüberliegenden Seitenwänden (2) des Laderaums angeordnet ist, denen jeweils ein Führungselement (14) als ladebodenseitiges Gegenelement an gegenüberliegenden Ladebodenseiten (8, 9) zugeordnet ist, wobei bevorzugt vorgesehen ist, dass die einander gegenüberliegende n Kulissenführungen (12) als Gleichteile und/oder die einander gegenüberliegenden Führungselemente (14) als Gleichteile ausgebildet sind.

12. Halteeinrichtung nach einem der Ansprüche 1 bis11, **dadurch gekennzeichnet, dass** die wenigstens eine Kulissenführung (12) in einer Konsole (11) ausgebildet ist.

13. Halteeinrichtung nach einem der Ansprüche 1 bis 12, **dadurch gekennzeichnet, dass** der Ladeboden (5; 5') in einer Hochstellposition mit seiner der Laderaumöffnung zugewandten Querseite (7) an einer in Höhe der dortigen Ladekante (4) liegenden Auflageleiste (13) einer Laderaumabschlusswand (3) und in einer tiefsten Stellung mittel-oder unmittelbar am Laderaumboden, insbesondere am Bodenblech (1), des Laderaums aufliegt.

14. Halteeinrichtung nach Anspruch 13, **dadurch gekennzeichnet, dass** der Ladeboden (5; 5') beim Absenken aus einer höheren Position in Verbindung mit der Kulissenführung (12) in Laderaumlängsrichtung derart verlagerbar ist, dass die nur aufliegende Querseite (7) des Ladebodens (5; 5') in der tieferen Stellung an der wenigstens einen, jeweils einer Hochposition zugeordneten Auflageleiste (13) vorbeiführbar ist.

15. Halteeinrichtung nach einem der Ansprüche 1 bis 14, **dadurch gekennzeichnet, dass** der Ladeboden (5') wenigstens in einer hochgestellten Position mit einem Abschnitt (5d) über eine bevorzugt quer verlaufende Klappachse (16) zusätzlich aufklappbar ist, wobei an den Seitenwänden (2) des Laderaums angeordnete, bevorzugt zwischen den Führungselementen (14) und der Klappachse (16) liegende, Auflager (17) den nicht aufklappbaren Abschnitt (5c) des Ladebodens (5') in dessen höherer Stellung abstützen.

16. Halteeinrichtung nach Anspruch 15, **dadurch gekennzeichnet, dass** in dem nicht aufklappbaren Abschnitt (5c) des Ladebodens (5') an dessen Längsseiten (8, 9) eine offene Ausnehmung (18) vorgesehen ist, die bei der tiefer liegenden Stellung des Ladebodens (5') mit den Auflagern (17) derart fluchten, dass der Ladeboden (5') an den Auflagern (17) vorbeiführbar ist, insbesondere an den Auflagern (17) vorbei am Laderaumboden (1) ablegbar ist.

17. Halteeinrichtung nach Anspruch 15 oder 16, **dadurch gekennzeichnet, dass** die Auflager (17) derart verstellbar an den Seitenwänden (2) des Laderaums angeordnet sind, dass sie von einer Abstützstellung in eine Nicht-Gebrauchsstellung und umgekehrt überführbar sind.

18. Halteeinrichtung nach einem der Ansprüche 1 bis 17, **dadurch gekennzeichnet, dass** der höhenverstellbare Ladeboden (5; 5') zugleich als Wendeboden ausgebildet ist dergestalt, dass dieser sowohl im gewendeten als auch im nicht-gewendeten Zustand in den unterschiedlichen Höhenpositionen anordenbar ist.

## Claims

1. Holding unit for a height adjustable cargo bed of a vehicle, with a cargo compartment, with a height adjustable cargo bed and with at least one holding element which is designed as a slotted guide mechanism (12) and can be arranged on the cargo compartment side, in which slotted guide mechanism (12) the cargo bed (5; 5') engages by means of an assigned single guide element (14) and can be arranged in different height positions, wherein the slotted guide mechanism (12) is formed with a plurality of supporting shoulders (12a, 12b) located at different height levels, and wherein the individual supporting shoulders (12a, 12b) of the slotted guide mechanism (12) are connected by means of a connecting slot (12c) which is designed in such a manner that the guide element (14), engaging in the slotted guide mechanism (12), can be shifted between the respective supporting shoulders (12a, 12b), **characterized in that** the guide element (14) is designed in such a manner that, in the respective supporting shoulder supporting position, as seen in the longitudinal direction of the cargo bed, said guide element is supported and secured in a form-fitting manner in the slotted guide mechanism (12), and **in that** the at least one guide element (14) has such a geometry and/or outer contour that said guide element (14) can be transferred via a correspondingly dimensioned connecting slot (12c) of the respective slotted guide mechanism (12) into a different height position only when the cargo bed (5; 5') is swung upward.

2. Holding unit according to Claim 1, **characterized in that** a wall section (12e) which runs obliquely or is positioned at an angle in relation to the direction of the vertical axis is formed in the mouth region of an upwardly open slotted guide mechanism (12) and/or in the connecting slot region between two supporting shoulders (12a, 12b) located one above the other in the direction of the vertical axis, said wall section supporting the guide element (14) in the manner of a guide ramp as said guide element slides toward the respective supporting shoulder (12b).

3. Holding unit according to Claim 1 or 2, **characterized in that**, in the transition region from a first supporting shoulder (12a) to a second supporting shoulder (12b), the connecting slot (12) is formed with a slot narrowing (12g) which is adjoined by upwardly and/or downwardly widening supporting shoulder regions and/or connecting slot regions.

4. Holding unit according to Claims 2 and 3, **characterized in that** the slot narrowing (12g) is formed by a supporting shoulder (12a) which has a defined gap spacing from the obliquely running wall section (12e).

5. Holding unit according to one of Claims 1 to 4, **characterized in that** the at least one guide element is formed by an elongate strip (14) extending in the longitudinal direction of the cargo bed.

6. Holding unit according to Claim 7, **characterized in that**, in an upwardly open slotted guide mechanism region and/or in the connecting slot region between two supporting shoulders (12a, 12b) located one above the other in the direction of the vertical axis, the slotted guide mechanism (12) is formed with at least one wall section (12d, 12h) having a defined radius of curvature or pivoting radius such that, when the cargo bed (5; 5') is swung downward and upward into the respective height position or out of the respective height position, the strip (14), guided with a defined pivoting movement, can be pivoted toward the respective supporting shoulder (12b) or away therefrom.

7. Holding unit according to Claim 5 or 6, **characterized in that**, in the state inserted into or placed onto the respective supporting shoulder (12a, 12b), the at least one strip (14) is pressed with a front and/or rear strip end in the longitudinal direction of the at least one strip into a latching groove (12f) on the supporting shoulder side, provision being made, in particular in conjunction with a front and rear latching groove, for at least one latching groove to be able to be pressed over releasably with a defined force.

8. Holding unit according to one of Claims 5 to 7, **characterized in that** the at least one strip (14) has a rhomboidal outer contour which is preferably of symmetrical design with respect to an axis of symmetry running through the strip (14) in the direction of the longitudinal axis and/or in the direction of the vertical axis.

9. Holding unit according to one of Claims 1 to 8, **characterized in that** the at least one guide element (14) of the cargo bed (5; 5') is integrally formed on a connecting piece, in particular an elbow (15) which partially surrounds the cargo bed (5; 5') on the transverse side (6) thereof and/or on the longitudinal side (8, 9) thereof.

10. Holding unit according to one of Claims 1 to 8, **characterized in that** the at least one guide element (14) is formed from the same material as and/or as a single piece with the cargo bed (5), and in particular the at least one guide element (14) is formed from the same material as and/or as a single piece with a reinforcing element, preferably a reinforcing plate, stiffening and/or reinforcing the cargo bed (5), and is most preferably integrally formed on the reinforcing element or formed from the reinforcing element.

11. Holding unit according to one of Claims 1 to 10, **characterized in that** a slotted guide mechanism (12) as the holding element on the cargo compartment side is arranged in each case on opposite side walls (2) of the cargo compartment, which are each assigned a guide element (14) as the mating element on the cargo bed side on opposite cargo bed sides (8, 9), provision preferably been made for the mutually opposite slotted guide mechanisms (12) to be designed as identical parts and/or for the mutually opposite guide elements (14) to be designed as identical parts.

12. Holding unit according to one of Claims 1 to 11, **characterized in that** the at least one slotted guide mechanism (12) is formed in a console (11).

13. Holding unit according to one of Claims 1 to 12, **characterized in that** the cargo bed (5; 5'), in an upright position, rests with its transverse side (7) facing the cargo compartment opening, on a supporting strip (13) of a cargo compartment end wall (3), said supporting strip lying level with the cargo compartment edge (4) there, and, in a lowermost position, rests indirectly or directly on the cargo compartment floor, in particular on the floor panel (1), of the cargo compartment.

14. Holding unit according to Claim 13, **characterized in that** the cargo bed (5; 5'), during lowering from a higher position, can be shifted in the longitudinal direction of the cargo compartment, in conjunction with the slotted guide mechanism (12), in such a manner that, in the lower position, the merely resting transverse side (7) of the cargo bed (5; 5') can be guided past the at least one supporting strip (13) which is assigned in each case to a vertical position.

15. Holding unit according to one of Claims 1 to 14, **characterized in that**, at least in an upright position, the cargo bed (5') can additionally be swung upward with a section (5d) via a preferably transversely running folding axis (16), with supports (17) which are arranged on the side walls (2) of the cargo compartment and preferably lie between the guide elements (14) and the folding axis (16) supporting that section (5c) of the cargo bed (5') which cannot be swung upward in the higher position of said cargo bed.

16. Holding unit according to Claim 15, **characterized in that** an open recess (18) is provided **in that** section (5c) of the cargo bed (5') which cannot be swung upward, on the longitudinal sides (8, 9) of said cargo bed, which recess is aligned with the supports (17) in the lower position of the cargo bed (5') in such a manner that the cargo bed (5') can be guided past the supports (17) and in particular can be placed on the cargo compartment floor (1) past the supports (17).

17. Holding unit according to Claim 15 or 16, **characterized in that** the supports (17) are arranged adjustably on the side walls (2) of the cargo compartment in such a manner that said supports can be transferred from a supporting position into an inoperative position, and vice versa.

18. Holding unit according to one of Claims 1 to 17, **characterized in that** the height adjustable cargo bed (5; 5') is designed at the same time as a reversible bed such that said cargo bed can be arranged in the different height positions both in the reversed state and in the non-reversed state.

## Revendications

1. Dispositif de retenue pour un plancher de chargement réglable en hauteur d'un véhicule, comprenant un espace de chargement avec un plancher de chargement réglable en hauteur et un élément de retenue réalisé sous forme de guide à coulisse (12), pouvant être disposé du côté de l'espace de chargement, dans lequel guide à coulisse (12) le plancher de chargement (5 ; 5') vient en prise avec un élément de guidage unique associé (14) et peut être disposé dans différentes positions en hauteur, le guide à coulisse (12) étant réalisé avec plusieurs épaulements de support (12a, 12b) situés à des niveaux en hauteur différents, et les épaulements de support individuels du guide à coulisse (12) étant connectés au moyen d'une fente de liaison (12c), qui est réalisée de telle sorte que l'élément de guidage (14) puisse être déplacé en prise dans le guide à coulisse (12) entre les épaulements de support respectifs (12a, 12b), **caractérisé en ce que** l'élément de guidage (14) est réalisé de telle sorte que, vu dans la direction longitudinale du plancher de chargement, celui-ci soit supporté et retenu dans la position de support respective des épaulements de support par engagement positif dans le guide à coulisse (12), et **en ce que** l'au moins un élément de guidage (14) présente une géométrie et/ou un contour extérieur tels que celui-ci puisse être transféré dans une autre position en hauteur par le biais d'une fente de liaison (12c), dimensionnée en conséquence, du guide à coulisse respectif (12), uniquement lorsque le plancher de chargement (5 ; 5') est relevé.

2. Dispositif de retenue selon la revendication 1, **caractérisé en ce que** dans la région d'embouchure d'un guide à coulisse (12) ouvert vers le haut et/ou dans la région de la fente de liaison entre deux épaulements de support (12a, 12b) superposés dans la direction de l'axe vertical, est réalisée une portion de paroi (12e) s'étendant obliquement ou inclinée suivant un certain angle par rapport à la direction de l'axe vertical, laquelle supporte de manière glissante l'élément de guidage (14) à la manière d'une rampe de guidage vers l'épaulement de support respectif (12b).

3. Dispositif de retenue selon la revendication 1 ou 2, **caractérisé en ce que** la fente de liaison (12) dans la région de transition d'un premier épaulement de support (12a) à un deuxième épaulement de support (12b) est réalisée avec un rétrécissement de fente (12g), auquel se raccordent des régions de fente de liaison ou d'épaulement de support s'élargissant vers le haut et/ou vers le bas.

4. Dispositif de retenue selon les revendications 2 ou 3, **caractérisé en ce que** le rétrécissement de fente (12g) est formé par un épaulement de support (12a) présentant un espacement défini par rapport à la portion de paroi (12e) s'étendant obliquement.

5. Dispositif de retenue selon l'une quelconque des revendications 1 à 4, **caractérisé en ce que** l'au moins un élément de guidage est réalisé par une baguette allongée (14) s'étendant dans la direction longitudinale du plancher de chargement.

6. Dispositif de retenue selon la revendication 7, **caractérisé en ce que** le guide à coulisse (12) est réalisé dans une région de guide à coulisse ouverte vers le haut et/ou dans une région de fente de liaison entre deux épaulements de support (12a, 12b) superposés dans la direction de l'axe vertical, avec au moins une telle portion de paroi (12d, 12h) présentant un rayon de courbure ou de pivotement défini, **en ce que** la baguette (14), lors du rabattement vers le bas et vers le haut du plancher de chargement (5 ; 5') dans la position respective en hauteur ou hors de celle-ci, peut être pivotée de manière guidée avec un mouvement de pivotement défini vers l'épaulement de support (12b) respectif ou depuis celui-ci.

7. Dispositif de retenue selon la revendication 5 ou 6, **caractérisé en ce que** l'au moins une baguette (14) est enfoncée dans l'état inséré dans, ou posé sur, l'épaulement de support respectif (12a, 12b), avec une extrémité de baguette avant et/ou arrière dans la direction longitudinale de la baguette, dans une rainure d'encliquetage (12f) du côté de l'épaulement de support, et il est prévu notamment en association avec une rainure d'encliquetage avant et arrière, qu'au moins une rainure d'encliquetage puisse être pressée davantage de manière détachable avec une force définie.

8. Dispositif de retenue selon l'une quelconque des revendications 5 à 7, **caractérisé en ce que** l'au moins une baguette (14) présente un contour extérieur en forme de losange, qui est réalisé de préférence de manière symétrique par rapport à un axe de symétrie s'étendant dans la direction de l'axe longitudinal et/ou dans la direction de l'axe vertical à travers la baguette (14).

9. Dispositif de retenue selon l'une quelconque des revendications 1 à 8, **caractérisé en ce que** l'au moins un élément de guidage (14) du plancher de chargement (5 ; 5') est façonné au niveau d'une pièce de connexion, en particulier d'une pièce angulaire (15), qui entoure en partie le plancher de chargement (5 ; 5') au niveau de son côté transversal (6) et/ou au niveau de son côté longitudinal (8, 9).

10. Dispositif de retenue selon l'une quelconque des revendications 1 à 8, **caractérisé en ce que** l'au moins un élément de guidage (14) est réalisé venu de matière et/ou d'une seule pièce avec le plancher dé chargement (5), en particulier l'au moins un élément de guidage (14) est réalisé venu de matière et/ou d'une seule pièce avec un élément de renforcement rigidifiant et/ou renforçant le plancher de chargement (5), de préférence une plaque de renforcement, particulièrement préférablement est façonné sur l'élément de renforcement ou est formé dans l'élément de renforcement.

11. Dispositif de retenue selon l'une quelconque des revendications 1 à 10, **caractérisé en ce qu'**un guide à coulisse (12) servant d'élément de retenue du côté de l'espace de chargement est à chaque fois disposé sur des parois latérales opposées (2) de l'espace de chargement, auxquelles est à chaque fois associé un élément de guidage (14) en tant qu'élément conjugué du côté du plancher de chargement sur des côtés opposés du plancher de chargement (8, 9), et de préférence il est prévu que les guides à coulisse (12) opposés soient réalisés sous forme de pièces identiques et/ou que les éléments de guidage opposés (14) soient réalisés sous forme de pièces identiques.

12. Dispositif de retenue selon l'une quelconque des revendications 1 à 11, **caractérisé en ce que** l'au moins un guide à coulisse (12) est réalisé dans une console (11).

13. Dispositif de retenue selon l'une quelconque des revendications 1 à 12, **caractérisé en ce que** le plancher de chargement (5 ; 5') repose dans une position debout avec son côté transversal (7) tourné vers l'ouverture de l'espace de chargement au niveau d'une nervure d'appui (13) d'une paroi de fermeture de l'espace de chargement (3) située à la hauteur de l'arête de chargement (4) s'y trouvant, et dans une position plus basse, de manière indirecte ou directe sur le plancher de chargement, notamment sur la tôle du plancher (1) de l'espace de chargement.

14. Dispositif de retenue selon la revendication 13, **caractérisé en ce que** le plancher de chargement (5 ; 5'), lors de l'abaissement d'une position surélevée peut être déplacé en association avec le guide à coulisse (12) dans la direction longitudinale de l'espace de chargement, de telle sorte que le côté transversal (7) du plancher de chargement (5 ; 5') seulement en appui puisse être guidé dans la position la plus basse devant l'au moins une nervure d'appui (13) associée à chaque fois à une position haute.

15. Dispositif de retenue selon l'une quelconque des revendications 1 à 14, **caractérisé en ce que** le plancher de chargement (5'), au moins dans une position haute, peut en outre être relevé avec une portion (5d) par le biais d'un axe de pivotement (16) s'étendant de préférence transversalement, des appuis (17) disposés au niveau des parois latérales (2) de l'espace de chargement, de préférence entre les éléments de guidage (14) et l'axe de pivotement (16), supportant la portion non relevable (5c) du plancher de chargement (5') dans sa position plus haute.

16. Dispositif de retenue selon la revendication 15, **caractérisé en ce que** dans la portion non relevable (5c) du plancher de chargement (5'), au niveau de ses côtés longitudinaux (8, 9), est prévu un évidement ouvert (18) qui, dans la position plus basse du plancher de chargement (5'), est aligné avec les appuis (17) de telle sorte que le plancher de chargement (5') puisse être guidé devant les appuis (17), notamment puisse être déposé sur le plancher de l'espace de chargement (1) devant les appuis (17).

17. Dispositif de retenue selon la revendication 15 ou 16, **caractérisé en ce que** les appuis (17) sont disposés de manière déplaçable au niveau des parois latérales (2) de l'espace de chargement, de telle sorte qu'ils puissent être transférés depuis une position de support dans une position de non utilisation et inversement.

18. Dispositif de retenue selon l'une quelconque des revendications 1 à 17, **caractérisé en ce que** le plancher de chargement (5 ; 5') réglable en hauteur est réalisé en même temps en tant que plancher réversible, de telle sorte que celui-ci puisse être disposé à la fois dans l'état inversé et dans l'état non inversé dans les différentes positions en hauteur.
